# EUROPÄISCHE PATENTSCHRIFT

(11) **EP 3 145 792 B1**
(45) Veröffentlichungstag und Bekanntmachung des Hinweises auf die Patenterteilung: **11.04.2018**
(21) Anmeldenummer: 15718205.6
(22) Anmeldetag: 21.04.2015
(51) Int. Cl.: B62D 5/04, H02P 29/50

(54) **VERFAHREN ZUR GERÄUSCHMINDERUNG UND GERÄUSCHMODULATION EINES ELEKTROMOTORS**
METHOD FOR THE REDUCTION AND MODULATION OF NOISE OF AN ELECTRIC MOTOR
PROCÉDÉ DE RÉDUCTION ET DE MODULATION DU BRUIT D'UN MOTEUR ÉLECTRIQUE

(30) Priorität: 23.05.2014 DE 102014007502
(43) Veröffentlichungstag der Anmeldung: 29.03.2017
(73) Patentinhaber: ThyssenKrupp Presta AG, 9492 Eschen (LI); Hochschule München, 80335 München (DE); thyssenkrupp AG, 45143 Essen (DE)
(72) Erfinder: MEYER, Martin, 9428 Walzenhausen (CH); SENTPALI, Stefan, 85276 Pfaffenhofen (DE)
(74) Vertreter: Lenzing Gerber Stute
(86) Internationale Anmeldenummer: PCT/EP2015/058569
(87) Internationale Veröffentlichungsnummer: WO 2015/176895

(56) Entgegenhaltungen:
- WO-A2-2014/177144
- DE-A1-102010 049 359

## Beschreibung

Die vorliegende Erfindung betrifft ein Verfahren zur Geräuschmodulation eines Elektromotors mit den Merkmalen des Oberbegriffs des Anspruchs 1.

Im Sinne der Erfindung sind unter dem Begriff "Geräusch" neben hörbaren Geräuschen auch Geräusche, die als Schwingungen wahrgenommen werden können subsumiert.

Elektromotoren werden beispielsweise in Servolenkungen oder Überlagerungslenkungen von Kraftfahrzeugen zur Unterstützung eines vom Fahrer eingeleiteten Lenkradhandmoments oder Aufbringen eines Zusatzlenkwinkels eingesetzt. Bei elektromechanischen Lenkungen unterstützt und überlagert der Elektromotor an der Lenksäule oder dem Lenkgetriebe die Lenkbewegung des Fahrers.

Im Betrieb erzeugt eine elektromechanische Lenkung, zum Beispiel bei Lenkbewegungen im Stand, akustische Emissionen, die auf den Elektromotor zurückzuführen sind. Die radialen Magnetfeldanteile des Elektromotors führen zu einer zyklischen Verformung des Motors, was eine akustische Abstrahlung verursacht.

In modernen elektrischen Lenksystemen wird um die Positionsregelegung von Synchronmotoren präzise zu gestalten, eine feldorientierte Vektorregelung (FOR) eingesetzt. Hierzu wird das dreiphasige Stromsystem mit Hilfe der Lage des Rotors des Synchronmotors, insbesondere des Polradwinkels ϕ, in ein komplexes, orthogonales Rotorkoordinatensystem überführt. Daraus resultieren die gedrehten Stromkomponenten id und iq, wobei id dem Magnetisierungsstrom und iq dem Drehmoment bildenden Strom des Synchronmotors entsprechen. Bei der Ansteuerung des Synchronmotors wird vor allem das Drehmoment optimiert, indem in nachgeschalteten PI-Regelstufen die d-q-Sollgrößen für die jeweilige Betriebssituation optimal ausgelegt werden. Dabei wird insbesondere die Stromkomponente q in den nachgeschalteten PI-Regelstufen zur vibro-akustische Optimierungen des Lenksystems in Form von Ripplekompensation geregelt. Akustische Probleme, wie die typischen Störgeräusche von Elektromotoren werden über klassische Ansätze unter Verwendung von Sekundärmaßnahmen behandelt. Durch die Sekundärmaßnahmen wird das System hinsichtlich wichtiger Zielgrößen, wie zum Beispiel Leichtbau und Steifigkeit verschlechtert. Außerdem werden durch die zusätzlichen Maßnahmen die Kosten und der Herstellungsaufwand gesteigert.

Bei elektromotorisch angetriebenen Fahrzeugen besteht insbesondere im Stadtverkehr das Problem, dass das Fahrzeug aufgrund der geringen Geräuschentwicklung akustisch verhältnismäßig schwer wahrnehmbar ist, was zu einem erhöhten Risiko führt. Um die Wahrnehmung zu verbessern, besteht beispielsweise die Möglichkeit, im Rangierbetrieb ein Warngeräusch zu erzeugen.

Aus der DE 10 2012 211 689 A1 ist ein Verfahren zur Geräuscherzeugung bekannt, bei dem die Bestromung des Elektromotors so modifiziert wird, dass die aus der Modifikation resultierende Änderung der Motorwellenumdrehung innerhalb einer definierten Toleranz liegt. Wie die Bestromung des Elektromotors genau moduliert wird, ist nicht offenbart.

In der JPH04200294 A ist ein Modulationsverfahren für einen Elektromotor zur Geräuschmodulation offenbart, bei dem der Motorstrom mit einer Trägerfrequenz moduliert wird, die ein Abbild der gewünschten Geräuschbildung ist. Dabei ist vorgesehen, die Störgeräusche des Motors durch eine Pulsweitenmodulation in ein musikalisches Intervall mit einer Melodie umzuwandeln. Nachteilig ist dabei, das entsprechend dem eingetragenen Geräusch die vom Elektromotor abgegebene Drehzahl und das abgegebene Drehmoment schwanken.

Aus der Schrift DE 10 2010 049359 A1, welche den nächsten Stand der Technik nach dem Oberbegriff des Anspruchs 1 offenbart, ist ein Verfahren zur Geräuschmodulation eines Elektromotors bekannt, dabei wird ein Strom und eine Spannung des Elektromotors durch Aufmodulieren eines akustischen Signals derart gesteuert, dass der Elektromotor in Schwingungen versetzt wird, welche dem akustischen Signal entsprechen.

Der Erfindung liegt die Aufgabe zugrunde, ein Verfahren zur Geräuschmodulation eines Elektromotors anzugeben, bei dem die vom Elektromotor abgegebene Drehzahl und das vom Elektromotor abgegebene Drehmoment nur in sehr geringem Maße beeinflusst werden.

Diese Aufgabe wird von einem Verfahren mit den Merkmalen des Anspruchs 1 gelöst.

Danach ist Verfahren zur Geräuschmodulation eines Elektromotors, wobei der Elektromotor ein mehrphasiger Synchronmotor ist, der unter Verwendung einer Vektorregelung mittels eines Motorsteuergeräts angetrieben ist, wobei in einer Regelstrecke Istwerte für die gedrehten Stromkomponenten id und iq gewonnen werden, wobei id dem Magnetisierungsstrom und iq dem Drehmoment bildenden Strom des Synchronmotors entsprechen, und wobei die Istwerte mit vorgegebenen Führungsgrößen iq_soll, id_soll verglichen werden, wobei die Differenzen zwischen den Istwerten und den Führungsgrößen über einen ersten Regler und eine erste Transformationsstufe in einem Duty-Cycle für einen PWM-Generator in Stellgrößen umgerechnet werden, um die Ist-Werte iq, id auf die Führungsgrößen iq_soll, id_soll zu regeln, vorgesehen, bei dem die Magnetisierungsstrom bildende Stromkomponente id in Abhängigkeit von einem akustischen Zustand, der von einer Messeinrichtung gemessen und mittels einer Signalausgabe an das Motorsteuergerät weitergegeben wurde, mittels eines Akustikreglers an einen gewünschten akustischen Zustand angepasst wird. Durch dieses Verfahren zur Geräuschmodulation wird das vom Elektromotor abgegebene Drehmoment nur in sehr geringem Maße beeinflusst.

Das Verfahren wird bevorzugt für einen dreiphasigen Synchronmotor eingesetzt.

Bevorzugt wird in dem Akustikregler entsprechend einer Vorgabefunktion eine Referenz-Akustikgröße mit dem akustischen Zustand verglichen, die resultierende Abweichung wird in elektrische Größen übersetzt und in einem Modell/Kennfeld in dq-Stromzielgrößen umgerechnet.

Mit Hilfe der erfindungsgemäßen Methode zur Geräuschmodulation können einerseits gezielt gewünschte Geräusche erzeugt werden, als auch Geräusche im Betrieb des Elektromotors verringert werden. Darüberhinaus können bei der Verwendung entsprechender Vorgabefunktionen für die Referenz-Akustikgröße auch gezielt andere Geräusche in Fahrzeugen beeinflusst werden. Dabei ist es auch denkbar und möglich durch entsprechend erzeugte phasenverschobene Schallemissionen im Elektromotor andere Fahrzeuggeräusche - im Sinne von Antischall - zu reduzieren oder auszulöschen.

In einer bevorzugten Ausführungsform werden die dq-Stromzielgrößen über einen zweiten Regler und eine zweite Transformationsstufe in physikalische Regelgrößen umgewandelt werden, die mit den physikalische Regelgrößen der Regelstrecke nach der ersten Transformationsstufe verrechnet werden.

Dabei ist es vorteilhaft, wenn die Akustikgrößen im Akustikregler in eine höherwertige Dimension umgerechnet werden.

Vorzugsweise ist der Elektromotor Teil eines Kraftfahrzeugs und/oder Teil einer Servolenkung.

Vorzugsweise wird das erfindungsgemäße Verfahren zur Geräuschmodulation als Verfahren zur Geräuschminderung in einem Kraftfahrzeug eingesetzt, bei dem ein Schallwert mit einer Sensorik ermittelt wird und daraus eine phasenverschobene Referenzakustikgröße bestimmt wird, die als Referenzwert für das zuvor ausgeführte Verfahren zur Geräuschmodulation des Elektromotors eingesetzt wird.

Nachfolgend wird ein Ausführungsbeispiel der Erfindung anhand der Zeichnungen näher beschrieben. Es zeigen:
- Fig. 1:: eine schematische Ansicht einer elektrischen Servolenkung, sowie
- Fig. 2:: einen Regelkreis eines Motorsteuergeräts.

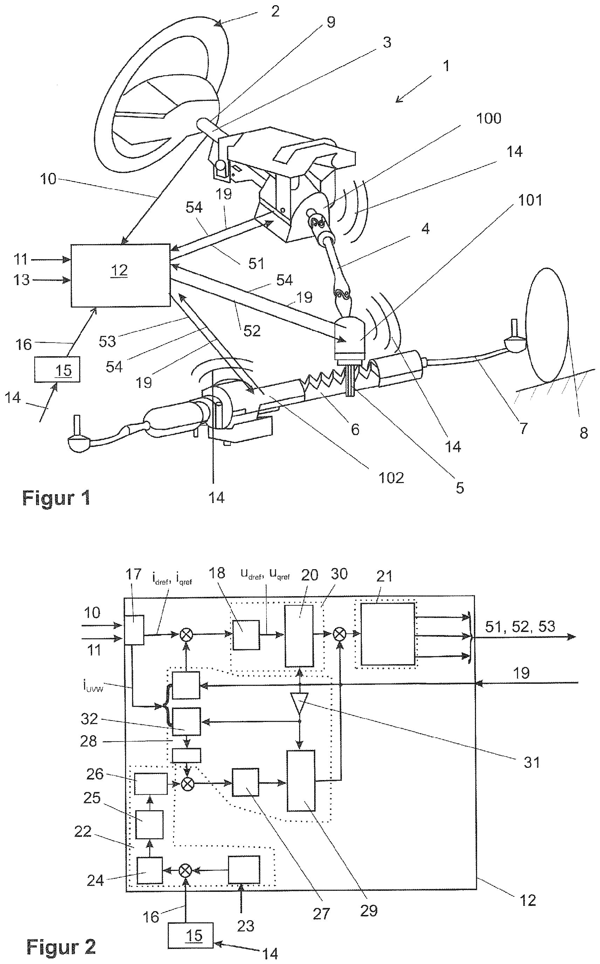

Die Figur 1 zeigt eine elektrische Servolenkung 1 für ein Kraftfahrzeug mit einem Lenkrad 2, das mit einer oberen Lenkwelle 3 und einer unteren Lenkwelle 4 drehfest gekoppelt ist. Die untere Lenkwelle 4 ist wiederum drehfest mit einem Lenkritzel 5 gekoppelt. Das Lenkritzel 5 kämmt in bekannter Weise mit einem Zahnsegment einer Zahnstange 6. Die Zahnstange 6 ist in einem Lenkungsgehäuse in Richtung ihrer Längsachse verschieblich gelagert. An ihrem freien Ende ist die Zahnstange 6 mit Spurstangen 7 verbunden. Die Spurstangen 7 selbst sind in bekannter Weise über Achsschenkel mit je einem gelenkten Rad 8 des Kraftfahrzeugs verbunden. Eine Drehung des Lenkrades 2 führt über die Verbindung der Lenkwelle 3, 4 und des Ritzels 5 zu einer Längsverschiebung der Zahnstange 6 und damit zu einer Verschwenkung der gelenkten Räder 8. Die gelenkten Räder 8 erfahren über eine Fahrbahn eine Rückwirkung, die der Lenkbewegung entgegen wirkt. Zum Verschwenken der Räder 8 ist folglich eine Kraft erforderlich, die ein entsprechendes Drehmoment am Lenkrad 2 erforderlich macht. Ein Servomotor einer Servoeinrichtung 100, 101, 102 ist vorgesehen, um dem Fahrer bei dieser Lenkbewegung zu unterstützen. Die Servoeinrichtung 100, 101, 102 kann dabei als Überlagerungslenkung an der Lenksäule 100 oder als Hilfskraftunterstützungseinrichtung an dem Ritzel 101 oder der Zahnstange 102 angeordnet sein. An der Lenkwelle ist ein Torsionssensor 9 vorgesehen, der ein Lenkdrehmoment 10 erfasst. Dieses Lenkdrehmoment 10 wird mit weiteren Eingangsgrößen 11, wie zum Beispiel der Fahrzeuggeschwindigkeit, und Messsignalen 54 vom Elektromotor, wie beispielsweise der momentanen Rotorposition 19 und/oder gemessener Stromwerte in den Phasenwicklungen, an ein Motorsteuergerät 12 übermittelt, welches daraus mit Hilfe einer Vorgabefunktion 13 Führungsgrößen bzw. einen Sollstrom für die Bestromung des Servomotors bestimmt. Der letztendlich berechneten Stellgrößen bzw. Stromwerte 51, 52, 53 werden an die Servoeinrichtung 100, 101, 102 weitergegeben und der Elektromotor entsprechend betrieben. Die vom Elektromotor erzeugten Geräusche 14 werden in einer Messeinrichtung 15 gemessen und mittels einer Signalausgabe 16 an das Motorsteuergerät 12 weitergegeben.

In der Figur 2 ist die erfindungsgemäße Geräuschmodulation des Elektromotors erklärt.
Anhand des gemessenen Lenkdrehmoments 10, weiterer Eingangsgrößen 11 und einer Vorgabefunktion 13 wird in einer ersten Einrichtung 17 des Motorsteuergeräts 12 ein dq-Sollstrom i_{dref}, i_{qref} und ein dreiphasigen Sollstrom iuvw bestimmt. In einer Steuereinrichtung 30 erfolgt die bekannte Lenkungsregelung. Im Beispiel regelt ein PI-Regler 18, der sogenannte Lenkungsregler, die dq-Sollspannungen u_{dref}, u_{qref} gemäß dieser dq-Sollgrößen i_{dref}, i_{qref} und der dq-Zustandsgrößen i_{d}, i_{q}, die mittels einer Rotorposition 19 und dem dreiphasigen Sollstrom iuvw bestimmt wurden. Anschließend erfolgt mit Hilfe des Rotorwinkels Θ eine inverse Transformation 20, um die Spannungsbefehlswerte von dem mitdrehenden Koordinatensystem in ein ortsfestes Koordinatensystem zu übertragen. In einer Einrichtung 21 werden die Spannungsbefehlswerte in elektrische Größen übersetzt. Dabei werden die Phasenströme der drei Motorphasen U, V, W gemäß der Spannungsbefehlswerte erzeugt, indem in dem Inverter MosFET-Schalter in bestimmten Mustern durch eine Pulsweitenmodulation-Ansteuerung geschaltet werden. Die Phasenströme 51, 52, 53 werden an die Servoeinrichtung 100, 101, 102 zur Ansteuerung weitergeleitet. Sie besitzen den geeigneten Betrag für eine gewünschte Lenkhilfe.
Eine Einrichtung 22 überprüft zunächst den akustischen Zustand, der von der Messeinrichtung 15 gemessen und mittels der Signalausgabe 16 an das Motorsteuergerät 12 weitergegeben wurde. Dabei wird entsprechend einer Vorgabefunktion 23 eine Referenz-Akustikgröße mit dem Ist-Wert des Signaleingangs verglichen. Die resultierende Abweichung wird über einen NVH-Controller 24 und eine Koordinatentransformation 25 in elektrische, höherharmonische Größen übersetzt und in einem Modell/Kennfeld 26 in dq-Stromzielgrößen umgerechnet, die erneut über einen PI-Regler 27 in einer Einrichtung 28 in physikalische Regelgrößen umgewandelt werden. Um das Tiefpassverhalten des PI-Reglers 27 in der Einrichtung 28 zu umgehen, werden die Ist- und die Soll-Größen in einer höherwertigen Dimension, entsprechend dem akustischen Problem, zum Beispiel einer n-ten Motorordnung, die einer n-ten Harmonischen der Motordrehzahl entspricht, umgerechnet. Die Regelung bezieht sich somit nicht mehr auf die Drehkoordinaten, sondern auf Vielfache davon, wodurch die Regelungsfrequenz künstlich verringert wird.

In der Einrichtung 28, die als By-Pass zum Lenkungsregler 18 angesehen werden kann, werden ebenfalls elektrisch höherharmonische Referenzwerte als Sollgröße verwendet. Dazu werden die Zustandsgrößen des Elektromotors zunächst in einen höherwertigen Zustand (Oberwellenbereich) im Transformer 31 angehoben. Nach erneuter Koordinatentransformation im Transformer 32 erfolgt ein Abgleich mit den Stromzielgrößen i_{dref}nₜₕ, i_{qref}nₜₕ, die aus der Einrichtung 22 zugeführt wurden. Der darauf folgende PI-Regler 27 regelt die Spannungen, die anschließend wiederum zurück transformiert werden müssen. Nach dieser inversen Transformation 29 werden die Spannungen nach der Einrichtung 20 in die Regelstrecke eingespeist und somit die Spannungsbefehlswerte vor der Erzeugung der Phasenströme an den gewünschten akustischen Zustand angepasst.

Wie in Figur 2 dargestellt, kann der Referenzwert des d-Anteils variabel eingestellt werden. Damit kann der radiale Anteil des Feldvektors im Wesentlichen frei stimuliert werden, was zur Verminderung von vorhandenen Schwingungen und Schallemissionen, zum Beispiel durch Erzeugung einer gegenphasigen Schallemission, bzw. zur freien Erzeugung von Schallemissionen führt.

Die vorgeschalteten Einrichtungen 22 und 28 werden als Akustikregler bezeichnet. Der Akustikregler arbeitet modell- oder kennfeldbasiert. Er ist in der Lage vibro-akustische Störgrößen, die aus der Lenkung kommen oder über die Lenkung übertragen werden, zu erfassen und in eine Referenzgröße zu konvertieren, die die Ausregelung der Störgröße bzw. die Erzeugung einer gewollten Anregung bewirkt. Der Akustikregler ist zusammen mit den Einrichtungen 17, 18, 20 und 21 auf dem Motorsteuergerät 12 angeordnet.

Die d- und q-Anteile können jeweils unabhängig voneinander verändert werden. Jedoch sind die Größen physikalisch aufgrund der Induktivität des Elektromotors miteinander gekoppelt. Daher müssen Auswirkungen des vorgeschalteten Akustikreglers auf das Lenkverhalten durch tangentiale Kraftanteile im Motor verhindert werden. Dies kann zum Beispiel durch die Ausnutzung der Dämpfung und der Elastizität im Lenkstrang gewährleistest werden. Hierzu ist jedoch eine Mindestfrequenz der Regelung einzuhalten. Um diese Mindestfrequenz der Regelung zu gewährleisten, kann der Akustikregler nicht dem Lenkungsregler vorgeschaltet werden, da dieser ein Tiefpassverhalten aufweist. Aus diesem Grund wird die Akustikstellgröße erst separat geregelt und dann nach dem Lenkungsregler mit den Spannungsbefehlsgrößen in Rotationskoordinaten verrechnet.

Die erfindungsgemäße Verfahren kann zur aktiven Kompensation von Elektromotorstörgeräuschen bei der Lenkung, zur aktiven Kompensation von über den Lenkstrang übertragene fahrbahnerregte Vibrationen, zur Signalerzeugung für Fahrerassistenzsysteme und zur aktiven und authentischen Gestaltung eines Fahrgeräusches für Elektrofahrzeuge eingesetzt werden.

Es wird eine betriebspunktabhängige Phasenregelung verwendet, um eine Anregung mit einem definierten Phasenbezug zur Störgröße unmittelbar an der Quelle zu erzeugen. Dabei kann sowohl die Hardware (Motor, Motorsteuergerät) als auch die Software von herkömmlichen Lenksystemen unverändert verwendet werden. Zusätzliche Aktuatoren für aktive Maßnahmen bzw. aufwendige Sekundärmaßnahmen können eingespart werden.

## Patentansprüche

1. Verfahren zur Geräuschmodulation eines Elektromotors, wobei der Elektromotor ein mehrphasiger Synchronmotor ist, der unter Verwendung einer Vektorregelung mittels eines Motorsteuergeräts (12) angetrieben ist, wobei in einer Regelstrecke Istwerte für die gedrehten Stromkomponenten id und iq gewonnen werden, wobei id dem Magnetisierungsstrom und iq dem Drehmoment bildenden Strom des Synchronmotors entsprechen, und wobei die Istwerte mit vorgegebenen Führungsgrößen (iq_soll, id_soll) verglichen werden, wobei die Differenzen zwischen den Istwerten und den Führungsgrößen über einen ersten Regler (18) und eine erste Transformationsstufe (20) in einem Duty-Cycle für einen PWM-Generator in Stellgrößen umgerechnet werden, um die Ist-Werte (iq, id) auf die Führungsgrößen (iq_soll, id_soll) zu regeln, **dadurch gekennzeichnet, dass** die den Magnetisierungsstrom bildende Stromkomponente (id) in Abhängigkeit von einem akustischen Zustand, der von einer Messeinrichtung (15) gemessen und mittels einer Signalausgabe (16) an das Motorsteuergerät (12) weitergegeben wurde, mittels eines Akustikreglers (22, 28) an einen gewünschten akustischen Zustand angepasst wird.

2. Verfahren zu Geräuschmodulation nach Anspruch 1, **dadurch gekennzeichnet, dass** der Elektromotor ein dreiphasiger Synchronmotor ist.

3. Verfahren zur Geräuschmodulation eines Elektromotors nach Anspruch 1 oder 2, **dadurch gekennzeichnet, dass** in dem Akustikregler (22, 28) entsprechend einer Vorgabefunktion (23) eine Referenz-Akustikgröße mit dem akustischen Zustand verglichen wird, die resultierende Abweichung in elektrische Größen übersetzt und in einem Modell/Kennfeld (26) in dq-Stromzielgrößen umgerechnet wird.

4. Verfahren zur Geräuschmodulation eines Elektromotors nach einem der vorhergehenden Ansprüche, **dadurch gekennzeichnet, dass** die dq-Stromzielgrößen über einen zweiten Regler (27) und eine zweite Transformationsstufe (29) in physikalische Regelgrößen umgewandelt werden, die mit den physikalische Regelgrößen der Regelstrecke nach der ersten Transformationsstufe (20) verrechnet werden.

5. Verfahren zur Geräuschmodulation eines Elektromotors nach einem der vorhergehenden Ansprüche, **dadurch gekennzeichnet, dass** die Akustikgrößen im Akustikregler (22, 28) in eine höherwertige Dimension umgerechnet werden.

6. Verfahren zur Geräuschmodulation eines Elektromotors nach einem der vorhergehenden Ansprüche, **dadurch gekennzeichnet, dass** der Elektromotor Teil eines Kraftfahrzeugs ist.

7. Verfahren zur Geräuschmodulation eines Elektromotors nach einem der vorhergehenden Ansprüche, **dadurch gekennzeichnet, dass** der Elektromotor Teil einer Servolenkung ist.

8. Verfahren zur Geräuschminderung in einem Kraftfahrzeug, bei dem ein Schallwert mit einer Sensorik ermittelt wird und daraus eine phasenverschobene Referenzakustikgröße bestimmt wird, die als Referenzwert für das Verfahren zur Geräuschmodulation des Elektromotors entsprechend den Ansprüchen 3 bis 6 eingesetzt wird.

## Claims

1. Method for noise modulation of an electric motor, wherein the electric motor is a multi-phase synchronous motor that is driven using a vector control by means of a motor control unit (12), wherein actual values for the rotated current components id and iq are obtained in a control system, wherein id represents the magnetizing current and iq represents the torque-generating current of the synchronous motor, and wherein the actual values are compared with predetermined reference values (iq_soll, id_soll), wherein the differences between the actual values and the reference values are converted into manipulated variables in a duty-cycle for a PWM generator via a first controller (18) and a first transformation stage (20), in order to regulate the actual values (iq, id) with respect to the reference values (iq_soll, id_soll), **characterized in that** the current component forming the magnetizing current (id) is measured as a function of an acoustic state by a measuring device (15), and transmitted to the engine control unit (12) by means of a signal output (16), wherein it is adapted to a desired acoustic state by means of an acoustic controller (22, 28).

2. Method for noise modulation according to claim 1, **characterized in that** the electric motor is a three-phase synchronous motor.

3. Method for noise modulation of an electric motor according to claim 1 or 2, **characterized in that** a reference acoustic quantity corresponding to a default function (23) is compared with the acoustic state in the acoustic controller (22, 28), wherein the resulting deviation is translated into electrical quantities and converted into dq current target quantities in a characteristic map/model (26).

4. Method for noise modulation of an electric motor according to one of the preceding claims, **characterized in that** the dq current target quantities are converted via a second controller (27) and a second transformation stage (29) into physical regulating variables, which are compared with the physical regulating variables of the control system after the first transformation stage (20).

5. Method for noise modulation of an electric motor according to one of the preceding claims, **characterized in that** the acoustic quantities in the acoustic controller (22, 28) are converted to a higher-value level.

6. Method for noise modulation of an electric motor according to one of the preceding claims, **characterized in that** the electric motor is part of a motor vehicle.

7. Method for noise modulation of an electric motor according to one of the preceding claims, **characterized in that** the electric motor is part of a power steering system.

8. Method for noise reduction in a motor vehicle, wherein a sound value is detected by a sensor system and a phase-shifted reference acoustic quantity is determined from this to be used as a reference value for the method for noise modulation of the electric motor according to claims 3 to 6.

## Revendications

1. Procédé de modulation du bruit d'un moteur électrique, ledit moteur électrique étant un moteur synchrone multiphasé qui est entraîné au moyen d'une commande de moteur (12) en utilisant une régulation vectorielle où, pour cela, dans un système asservi, on acquiert des valeurs réelles des composantes tournées id et iq du courant, id correspondant au courant de magnétisation et iq au courant générateur de couple du moteur synchrone et où l'on compare ces valeurs réelles à des grandeurs de référence (iq_soll, id_soll) prédéfinies, où au moyen d'un premier régulateur (18) et d'un premier étage de transformation (20), on convertit les différences entre les valeurs réelles et les grandeurs de référence en grandeurs de réglage, dans un cycle de travail pour un générateur PWM, afin de régler les valeurs réelles (iq, id) aux grandeurs de référence (iq_soll, id_soll), **caractérisé en ce qu'**en fonction d'un état acoustique mesuré par un dispositif de mesure (15) et transmis à la commande de moteur (12) par le biais d'une sortie de signal (16), on adapte la composante de courant (id) générant le courant de magnétisation à un état acoustique voulu à l'aide d'un régulateur acoustique (22, 28).

2. Procédé de modulation du bruit selon la revendication 1, **caractérisé en ce que** le moteur électrique est un moteur synchrone triphasé.

3. Procédé de modulation du bruit d'un moteur électrique selon la revendication 1 ou 2, **caractérisé en ce que** l'on compare dans le régulateur acoustique (22, 28), conformément à une fonction préalablement définie (23), une grandeur acoustique de référence avec l'état acoustique, l'écart en résultant est traduit dans des grandeurs électriques et convertit dans un modèle/cartographie (26) dans des grandeurs cibles de courant dq.

4. Procédé de modulation du bruit d'un moteur électrique selon l'une des revendications précédentes, **caractérisé en ce que** les grandeurs cibles de courant dq sont converties au moyen d'un deuxième régulateur (27) et d'une deuxième étape de transformation (29) dans des grandeurs de réglage physiques qui sont compensées avec les grandeurs de réglage physiques du système asservi après la première étape de transformation (20).

5. Procédé de modulation du bruit d'un moteur électrique selon l'une des revendications précédentes, **caractérisé en ce que** les grandeurs acoustiques dans le régulateur acoustique (22, 28) sont converties en une dimension supérieure.

6. Procédé de modulation du bruit d'un moteur électrique selon l'une des revendications précédentes, **caractérisé en ce que** le moteur électrique fait partie d'un véhicule à moteur.

7. Procédé de modulation du bruit d'un moteur électrique selon l'une des revendications précédentes, **caractérisé en ce que** le moteur électrique fait partie d'une direction assistée.

8. Procédé pour réduire le bruit dans un véhicule à moteur, lors duquel une valeur acoustique est déterminée avec un système de capteurs en déterminant ainsi une grandeur acoustique de référence déphasée qui est utilisée en tant que valeur de référence pour le procédé de modulation du bruit du moteur électrique conformément aux revendications 3 à 6.
